# EUROPEAN PATENT SPECIFICATION

(11) **EP 4 051 563 B1**
(45) Date of publication and mention of the grant of the patent: **14.06.2023**
(21) Application number: 19816447.7
(22) Date of filing: 31.10.2019
(51) Int. Cl.: B62J 17/02

(54) **FRONT FAIRING FOR A SCOOTER**
FRONTVERKLEIDUNG FÜR EINEN ROLLER
CARÉNAGE AVANT POUR SCOOTER

(43) Date of publication of application: 07.09.2022
(73) Proprietor: Zapp Electric Vehicles Limited, London NW9 6BX (GB)
(72) Inventor: CHATSUWAN, Swin, London NW9 6BX (GB); THANATHAWEE, Warin, London NW9 6BX (GB); MUNPRASIT, Namkarn, London NW9 6BX (GB)
(74) Representative: Patentanwaltskanzlei Matschnig & Forsthuber OG
(86) International application number: PCT/IB2019/059346
(87) International publication number: WO 2021/084314

(56) References cited:
- EP-A1- 0 060 807
- CN-U- 204 567 892
- JP-A- 2017 043 128
- JP-U- H0 687 179
- JP-U- S60 105 288
- US-A- 4 655 497
- US-A1- 2003 011 166
- US-A1- 2012 248 812
- US-B1- 6 231 104
- US-B1- 6 736 441

## Description

### FIELD OF INVENTION

The present invention relates to a front fairing for a scooter.

### BACKGROUND OF THE INVENTION

It is known in the arts that scooters are usually provided with a frame assembly at the front of the scooter to provide protection to the scooter from environmental factors, as well as to reduce wind resistance while operating. Particularly, conventional scooters are provided with a frontal frame structure called front fairings and/or simply called fairings.

Generally, front fairings are a part of a scooter's overall body fairings and fixed to the frame of the vehicle. With such configuration, they tend to have various disadvantages, for example, there might be difficulties in the installation of the fairings on the scooter during both assembly and disassembly, as well as difficulties in maintenance of both fairings and other related components, such as the windshield and headlights, since the fairings are formed as substantial pieces covering a significant area of the vehicle. In addition, the cost of maintenance for the vehicle can potentially increase as damage to any part of the body fairing might lead to a necessary replacement of the entire body fairing.

United States Patent No. 4,010,976 discloses a motorcycle fairing installed at the frontal part of the motorcycle, which can direct air in a way that protects the rider from the flow of air while riding. The disclosed fairing has various connection elements with specific material properties in order to be assembled as the front fairing of a motorcycle.

Accordingly, there is a need for a front fairing for a scooter that can be installed and removed with ease. JP 2017 043128 A discloses a front fairing according to the preamble of claim 1.

### CITATION LIST

### Patent Literature

PTL 1: United States Patent specification No. 4,010,976
PTL 2: JP 2017 043128 A

### SUMMARY OF THE INVENTION

It is an obj ective of the present invention to provide a scooter with a front fairing disposed on the frontal part of the scooter, where the front faring can be easily installed and maintained and offer protection while the scooter is being operated.

In order to achieve the above objective, an embodiment of the present invention, which invention is defined by claim 1, provides a front fairing for a scooter, the scooter having a front fork assembly including a triple tree and a plurality of forks, the front fairing comprising: a fairing body partially defining a shape of the front fairing; the fairing body including a frontward surface and a rearward surface being connected to the front fork assembly; a first connecting member disposed on the rearward surface; at least two second connecting members disposed on the rearward surface, characterized in that the first connecting member provides a temporary connection to the triple tree so that the front fairing is capable of being detached from the triple tree, and the second connecting members provide a temporary connection to the fork so that the front fairing is capable of being detached from the fork, wherein such temporary connection is formed by no more than six fasteners.

According to the embodiment, the front fairing does not form a part of any body fairing of the scooter. The front fairing has no part that connects or fixes to the main/overall body of the scooter. Moreover, the front fairing is independently connected to the articulating part of the scooter with a low number of connection points.

As such, the front fairing functions as a separate component from the scooter and can be easily replaced without affecting the other parts of the scooter or the rest of the body fairing. With relatively few connection points, the front fairing may be removed from the scooter with ease. The front fairing can be easily changed by a user at their desire resulting in greater flexibility and customization of the scooter.

Secondly, according to the embodiment, the front fairing turns its direction together with the frontal components of the scooter, particularly, a handlebar, a front wheel, and at least one headlight.

As such, the front fairing provides an aesthetic and dynamic property to the scooter, since a conventional scooter would provide a static fairing that is not affected by any turning of direction.

Thirdly, according to the embodiment, the front fairing has a sufficient area such that it can function partly as a barrier dividing a rider and the rest of the scooter from the incoming flow of air at the frontal part of the scooter. Moreover, the front fairing directs the flow of air in various directions, as well as prevents any external objects from making contact with the rider or other parts of the scooter.

As such, the front fairing can protect the rider or other parts of the scooter from hazardous objects and/or debris that can present with the incoming flow of air in relative to the direction of the scooter.

In another embodiment of the present invention, the fairing body comprises a lower part protruding downwards.

As such, the front fairing has an appearance of a full fairing which provides substantial protection to the rider and aesthetic aspect to the scooter.

In another embodiment of the present invention, the front fairing further comprises an opening configured to provide a space for displaying a headlight.

According to the embodiment of the present invention, the headlight is positioned at the space provided on the front fairing without necessarily mainly attaching to the front fairing itself.

Therefore, the weight of the headlight does not contribute to the weight of the front fairing, which in turn does not negatively affect the turning and/or steering of the scooter. Moreover, said headlight can also turn its direction with the front fairing. Thus, the headlight will turns into the direction where the scooter is heading, resulting in superior vision for the rider.

According to the invention, the front fairing further comprises a rear fairing member engaged with the rearward surface forming an enclosure to provide a space storing one or more component that is essential to the scooter's intended functioning.

According to the invention, since the rear fairing member is engaged with the rearward surface, an enclosure is formed on the rearward surface of the scooter. Therefore, an additional space is provided on the rearward surface. The certain key components of the scooter, such as electrical parts and wirings, can be placed inside the provided space where they are protected and cannot be seen from the outside.

In another embodiment of the present invention, the fairing body further comprises a collar, configured to cover a steering apparatus.

According to the embodiment of the present invention, support is provided for a steering apparatus, including a handlebar. As such, the handlebar can be placed on the collar, which facilitates the steering of the scooter. Moreover, additional scooter components, such as a dashboard and a windscreen, can be placed on the collar allowing the front fairing to be operated with complete functions.

### BRIEF DESCRIPTION OF DRAWINGS

The present invention and its advantages will become apparent in the following description taking into consideration the accompanying drawings in which:
FIG.1A and 1B are perspective views of a front fairing 1, according to an embodiment of the present invention;
FIG.2 is a back view of the front fairing 1, with a front fork assembly 20, according to an embodiment of the present invention;
FIG.3A and 3B are perspective views of a scooter with the front fairing 1, according to an embodiment of the present invention;
FIG.4 is a back view of the front fairing 1, with a front fork assembly 20, and rear fairing members 40, according to the present invention; and
FIG.5 is an explanation view of the front fairing 1, with a front fork assembly 20, rear fairing members 40, and auxiliary components, according to the present invention.

### DETAILED DESCTIPTION OF EMBODIMENTS OF THE INVENTION

Unless indicated otherwise, certain terminologies are used in the following description for general illustration purposes only and shall not be construed to limit the scope of the present invention in any way. Likewise, any specific configurations, figures and/or dimensions herein are for illustration purposes and should not be construed to limit the scope of this technical disclosure.

Unless indicated otherwise, the terminology "scooter" shall be inclusive of any vehicles running on two or more wheels that are characterized by having a step-through frame, irrespective of circumstantial features or specifications, such as power outputs, types of engine, and placement of wheels. Examples of "scooter" under this meaning shall include fuel-driven scooters, electric scooters and so-called hybrid scooters, among others, which may be appreciated by a person having ordinary skills in the relevant technical field.

It must be noted that as used herein and in the appended claims, the singular forms "a", "an", and "the" include plural referents unless the context clearly dictates otherwise. Thus, for example, reference to "a component" includes a plurality of components.

In the following detailed description, relative positional terms such as "front", "rear", "right", "left", "frontward", and "rearward" correspond to those directions considered from the direction of the displacement of the operating scooter.

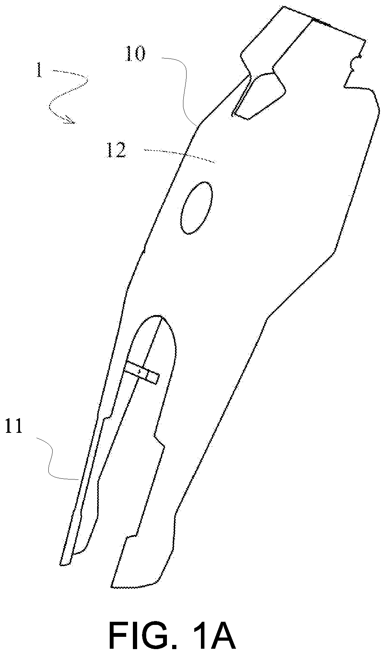

Hereinafter, an embodiment of the present invention will be described in detail with reference to FIG.1A to FIG.5.

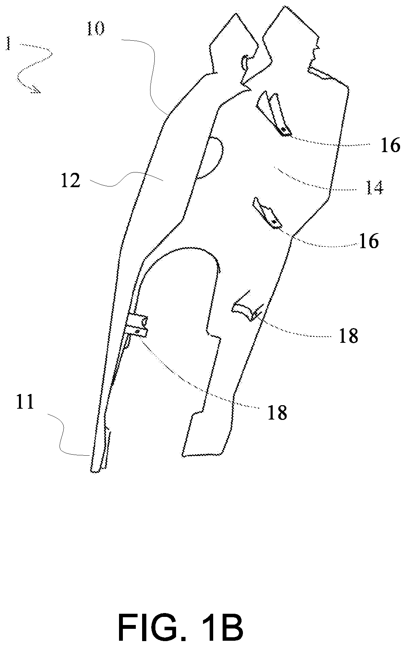

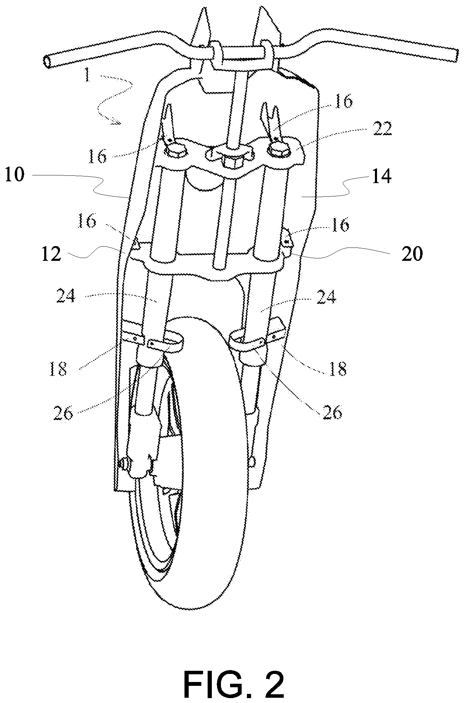

FIGs. 1A and 1B are perspective views of a front fairing 1 for a scooter according to an embodiment of the present invention. The front fairing is connected to a front fork assembly of the scooter which will be described in detail hereinafter. As shown in FIGs.1A and 1B, the front fairing 1 has a fairing body 10, which is the main frame of the front fairing 1. Since the fairing body 10 is the main frame of the front fairing 1, the fairing body 10 defines the majority of the shape of the front fairing 1. Moreover, the fairing body 10 has a frontward surface 12 and a rearward surface 14 being connected to the front fork assembly 20 as shown in FIG.2. Each of which is configured to facilitate the connection between the front fairing 1 and the scooter. Moreover, the fairing body 10 has a lower part 11 which extends by protruding downwards, providing a full fairing configuration which provides substantial protection to the rider and aesthetic aspects to the scooter.

As shown in FIG.1B and FIG.2, the rearward surface 14 is provided with a first connecting member 16. The first connecting member 16 is an extended part protruding from the rearward surface 14 of the fairing body 10. The first connecting member 16 is shaped to connect to the triple tree 22 of the front fork assembly 20. Preferably, the first connecting member 16 has a rectangular shape with at least one hole near the outer end. According to the invention, the first connecting member 16 is shaped integrally with the fairing body 10 within the same mold. More, preferably, the rearward surface 14 is provided with four first connecting members 16, with two at the upper portion and two at the lower portion.

Furthermore, on the rearward surface 14, there is provided at least two second connecting members 18. The second connecting member 18 is an extended part protruding from the lower part of the rearward surface 14 of the fairing body 10. The second connecting member 18 is shaped to receive a fork 24. According to the invention, the second connecting member 18 is shaped integrally with the fairing body 10 within the same mold. More preferably, the rearward surface 14 is provided with two second connecting members 18 on the left side and right side.

FIG.2 is a back view of the front fairing 1 with a front fork assembly 20, according to an embodiment of the present invention. As shown in FIG.2, the front fork assembly 20 will be discussed in more detail. The scooter is provided with the front fork assembly 20 at the frontal part of the vehicle. The front fork assembly 20 includes two triple trees 22, 22, alternatively called a triple clamp or yoke, located at the upper part and lower part of the assembly, two forks 24 located at the left and right side, and a neck pipe configured to connect between two triple trees 22, 22.

As shown in FIG.2, the fairing body 10 is provided with four first connecting members 16 and two second connecting members 18, while the front fork assembly 20 includes two triple trees 22 and two forks 24. The first connecting member 16 is connected to the triple tree 22 of the front fork assembly 20. Preferably, two of the first connecting members 16 are connected to the upper triple tree 22 and two of the first connecting members 16 are connected to the lower triple tree 22. The connection is preferably made by using fasteners, such as a screw penetrating holes provided at the first connecting member 16 and the triple tree 22. The second connecting member 18 is connected to the fork 24. Preferably, each second connecting member 18 is connected to each fork 24. The connection is preferably made by using fasteners, such as a screw penetrating holes provided at the second connecting member 18 and the fork 24. Moreover, the end of the second connecting member 18 is shaped in a way that it can receive the fork 24. For example, the second connecting member 18 has a curved shape end, specifically, a concave end to receive the cylinder shape of the fork 24. More preferably, the connection also includes a fork fairing fastener 26 having a straight part and a convex part to receive the second connecting member 18 and the fork 24, respectively.

According to an embodiment of the invention, the connection between the front fairing 1 and the front fork assembly 20 has a total of six connection points with four points between the first connecting members 16 and the triple trees 22 and two points between the second connecting members 18 and the forks 24. Preferably, the connection points as mentioned are a temporary connection using six fasteners. The front fairing 1 does not form a part of body fairing of the scooter and has no part which connects or fixes to the main/overall body of the scooter. In summary, the front fairing 1 is independently connected to the articulating part of the scooter with six connection points.

As a result, the front fairing 1 can function as a separate component from the scooter and can be easily replaced without affecting the other parts of the scooter or the rest of the body fairing. With only six connection points, the front fairing 1 is interchangeable from the scooter with ease. The front fairing 1 can be easily changed by an end user at their desire providing greater flexibility and customization of the scooter. Additionally, the front fairing 1 has a capability of field removal where a user or a rider can remove the front fairing 1 without help from a technician.

According to an embodiment of the invention, the lower part 11 is provided near the wheel of the scooter. The lower part 11 constitutes a full fairing configuration of the front fairing 1.

According to an embodiment of the invention, the front fork assembly 20 is connected to a steering apparatus, such as a handlebar, at one end of the front fork assembly 20. The front wheel of the scooter is connect to the other end of the front fork assembly 20 at the lower side via two forks 24. With such configuration, the front wheel can turn its direction together with the steering and/or turning of the handlebar.

As a result, with the dynamic movement of the front fairing 1, aesthetic and dynamic properties are provided to the scooter.

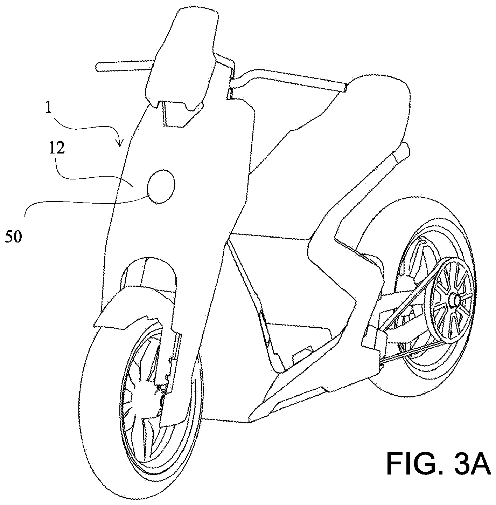

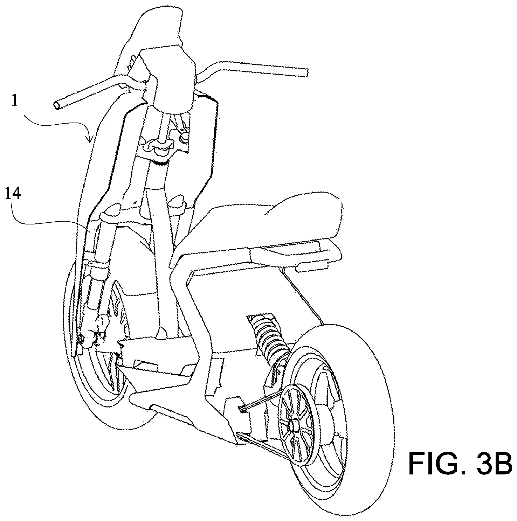

As shown in FIG.3A, the front fairing 1 connects to the frontal part of the scooter. It is known that the frontal part or frontal frame of any vehicles have an important contribution in the protection of the other parts of the vehicle, as well as in the aerodynamic properties of the vehicle. Accordingly, in an embodiment of the present invention, the front fairing 1 can be configured to have a sufficient area, such that it can function as a barrier dividing a rider and the rest of the scooter from the incoming flow of air at the frontal part of the scooter in order to prevent any external objects from making contact with the rider or other parts of the scooter. Moreover, with the sufficient area, the front fairing 1 can also be designed in a way that the front fairing 1 can direct the flow of air in various directions, which facilitate the operation of the scooter.

As a result, the front fairing can protect the rider or other parts of the scooter from hazardous objects and/or debris that can present with the incoming flow of air at high speeds.

As shown in FIGs.1A and 3A, the front fairing 1 can also include an opening, which goes through the frontward surface 12 and the rearward surface 14. Such opening can be configured to provide a space for displaying a headlight 50 with its frontal direction facing outward from the frontward surface 12. The opening can be merely a cut-out space with the shape of the headlight 50 to simply receive the headlight 50. Preferably, the opening can provide multiple layers of grooves to provide a snap-fit connection with the headlight 50.

As a result, the headlight 50 can turn its direction with the front fairing 1, as well as the direction where the scooter is heading, resulting in superior vision for the rider.

In the preferred embodiment, with the headlight 50 merely received at the opening, the front fairing 1 is not a main support for the headlight 50. The headlight 50 is connected to the lower triple tree 22 of the front fork assembly 20. Thus, the weight of the headlight 50 is supported by the front fork assembly 20.

As a result, the weight of the headlight 50 does not (or negligibly) contribute to the weight of the front fairing 1, which in turn does not negatively affect the turning or steering of the scooter.

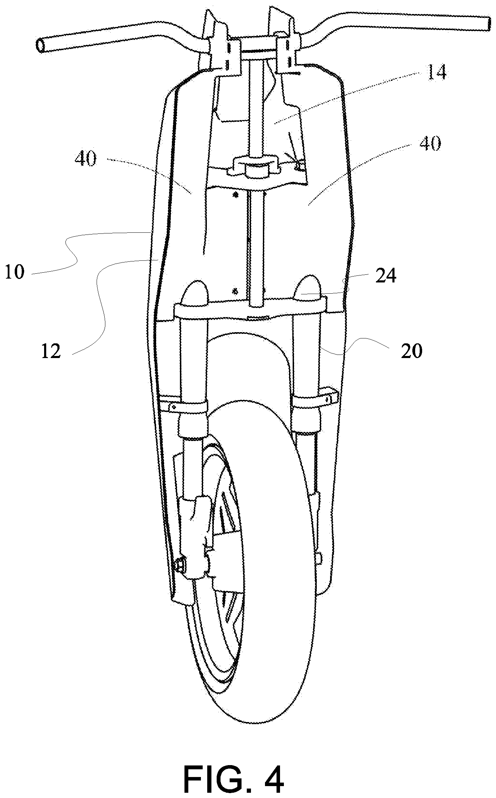

As shown in FIG.4, the front fairing 1 also has a rear fairing member 40 connected on the rearward surface 14. The rear fairing member 40 is configured to receive the rearward surface 14 of front fairing 1, with multiple protrusions designed to snap-fit with the front fairing 1. The rear fairing member 40 also has at least one hole for connecting the front fairing 1. Therefore, the front fairing 1 can be connected with the rear fairing member 40 with the snap-fit mechanism and by using fasteners. Preferably, the front fairing 1 is connected with two rear fairing members 40 at the left side and right side.

As a result, since the rear fairing member 40 is engaged with the rearward surface 14, an enclosure is formed on the rearward surface 14 of the scooter. Therefore, an additional space can be provided on the rearward surface 14 where certain key components of the scooter, such as electrical parts and wirings, can be placed inside. With the closed side of the rear fairing member 40 it can also prevent the inside of the enclosure from being seen.

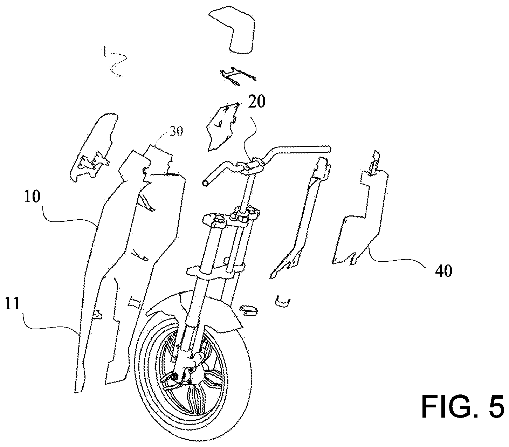

As shown in FIG.5, the front fairing 1 further has a collar 30, which has two circular parts to cover the handlebar. In addition, auxiliary fairing components can also be connected at the collar 30. The auxiliary fairing components include a fork mask, a dashboard, a dashboard cover, and a windscreen.

As a result, a support is provided for the handlebar. The handlebar can be placed on spaces provided by the collar 30, which facilitates the steering of the scooter. Moreover, additional components can be placed on the collar allowing the front fairing 1 to be operated with complete functions.

While this invention has been described in conjunction with the examples of embodiments outlined above, various alternatives, modifications, variations, improvements and/or substantial equivalents, whether known or that are or may be presently foreseen, may become apparent to those having at least ordinary skills in the art. Accordingly, the examples of embodiments of the invention, as set forth above, are intended to be illustrative, not limiting. Various changes may be made without departing from the scope of the invention as defined by the appended claims.

## Claims

1. A front fairing (1) for a scooter, the scooter having a front fork assembly (20) including a triple tree (22) and a plurality of forks (24), the front fairing (1) comprising:
a fairing body (10) partially defining a shape of the front fairing (1), the fairing body (10) including a frontward surface (12) and a rearward surface (14) configured to be connected to the front fork assembly (20);
a first connecting member (16) disposed on the rearward surface (14);
at least two second connecting members (18) disposed on the rearward surface (14),
the first connecting member (16) provides temporary connection to the triple tree (22) so that the front fairing (1) is configured to be detachable from the triple tree (22), and
each second connecting member (18) provides temporary connection to one of the forks (24) so that the front fairing (1) is configured to be detachable from the forks (24),
wherein
the first connecting member (16) and the second connecting members (18) are shaped integrally with the fairing body (10) within the same mold, and
wherein said temporary connections are formed by no more than six connection points in total, **characterized in that** the rearward surface (14) is engaged with a rear fairing member (40), the rear fairing member (40) and the rearward surface (14) forming an enclosure to provide a space for storing the scooter's one or more component.

2. The front fairing (1) of claim 1, wherein a fairing body (10) comprises a lower part (11) protruding downwards.

3. The front fairing (1) of claim 1 or 2, wherein the fairing body (10) further comprises a collar (30), configured to cover a steering apparatus.

4. The front fairing (1) of any one of claims 1 to 3, further comprising:
an opening configured to provide a space for displaying a headlight (50).

## Patentansprüche

1. Frontverkleidung (1) für einen Roller, wobei der Roller eine vordere Gabelanordnung (20) mit einer Gabelbrücke (22) und einer Vielzahl von Gabeln (24) aufweist, wobei die Frontverkleidung (1) aufweist:
einen Verkleidungskörper (10), der teilweise eine Form der Frontverkleidung (1) definiert, wobei der Verkleidungskörper (10) eine vordere Fläche (12) und eine hintere Fläche (14) aufweist, die dazu eingerichtet sind, mit der vorderen Gabelanordnung (20) verbunden zu werden;
ein an der hinteren Fläche (14) angeordnetes erstes Verbindungselement (16);
zumindest zwei an der hinteren Fläche (14) angeordnete zweite Verbindungselemente (18), das erste Verbindungselement (16) stellt eine temporäre Verbindung mit der Gabelbrücke (22) her, so dass die Frontverkleidung (1) von der Gabelbrücke (22) abnehmbar konfiguriert ist, und jedes zweite Verbindungselement (18) stellt eine temporäre Verbindung mit einer der Gabeln (24) her, so dass die Frontverkleidung (1) von den Gabeln (24) abnehmbar konfiguriert ist,
wobei das erste Verbindungselement (16) und die zweiten Verbindungselemente (18) einstückig mit dem Verkleidungskörper (10) in derselben Form geformt sind, und
wobei die temporären Verbindungen durch insgesamt nicht mehr als sechs Verbindungspunkte gebildet sind,
**dadurch gekennzeichnet, dass** die hintere Fläche (14) mit einem hinteren Verkleidungselement (40) in Eingriff steht, wobei das hintere Verkleidungselement (40) und die hintere Fläche (14) eine Einhausung zum Bereitstellen eines Raums zum Unterbringen der einen oder mehreren Komponenten des Rollers bilden.

2. Frontverkleidung (1) nach Anspruch 1, wobei ein Verkleidungskörper (10) einen nach unten vorstehenden unteren Teil (11) aufweist.

3. Frontverkleidung (1) nach Anspruch 1 oder 2, wobei der Verkleidungskörper (10) ferner eine Manschette(30) aufweist, die dazu eingerichtet ist, eine Lenkvorrichtung abzudecken.

4. Frontverkleidung (1) nach einem der Ansprüche 1 bis 3, zudem aufweisend:
eine Öffnung, die dazu eingerichtet ist, einen Raum zum Sichtbarmachen eines Scheinwerfers (50) zu liefern.

## Revendications

1. Carénage avant (1) pour un scooter, le scooter ayant un ensemble de fourche avant (20) comprenant un triple arbre (22) et une pluralité de fourches (24), le carénage avant (1) comportant :
un corps de carénage (10) définissant partiellement la forme du carénage avant (1), le corps de carénage (10) comprenant une surface avant (12) et une surface arrière (14) configurées pour être connectées à l'ensemble de fourche avant (20),
un premier élément de liaison (16) disposé sur la surface arrière (14),
au moins deux seconds éléments de liaison (18) disposés sur la surface arrière (14) ;
le premier élément de connexion (16) fournit une connexion temporaire au triple arbre (22) de sorte que le carénage avant (1) est configuré pour être détaché du triple arbre (22), et
chaque deuxième élément de connexion (18) assure une connexion temporaire à l'une des fourches (24) de sorte que le carénage avant (1) est configuré pour être détaché des fourches (24), le premier élément de connexion (16) et les seconds éléments de connexion (18) étant formés intégralement avec le corps de carénage (10) dans le même moule, et
lesdites connexions temporaires étant formées par un maximum de six points de connexion au total,
**caractérisé en ce que** la surface arrière (14) est engagée avec un élément de carénage arrière (40), l'élément de carénage arrière (40) et la surface arrière (14) formant une enceinte pour fournir un espace de stockage de l'un ou des plusieurs composants du scooter.

2. Carénage avant (1) de la revendication 1, dans lequel un corps de carénage (10) comporte une partie inférieure (11) faisant saillie vers le bas.

3. Carénage avant (1) de la revendication 1 ou 2, dans lequel le corps de carénage (10) comporte en outre un collier (30), configuré pour couvrir un appareil de direction.

4. Carénage avant (1) de l'une quelconque des revendications 1 à 3, comportant en outre :
une ouverture configurée pour fournir un espace pour présenter un phare (50).
